# EUROPÄISCHE PATENTSCHRIFT

(11) **EP 2 465 076 B1**
(45) Veröffentlichungstag und Bekanntmachung des Hinweises auf die Patenterteilung: **18.05.2016**
(21) Anmeldenummer: 10730385.1
(22) Anmeldetag: 08.07.2010
(51) Int. Cl.: G06K 7/10, G07G 1/00

(54) **VORRICHTUNG UND VERFAHREN ZUM OPTISCHEN ABTASTEN EINER MASCHINENLESBAREN MARKIERUNG**
DEVICE AND METHOD FOR OPTICALLY SCANNING A MACHINE-READABLE MARKING
DISPOSITIF ET PROCÉDÉ DE BALAYAGE OPTIQUE D'UN REPÈRE LISIBLE PAR MACHINE

(30) Priorität: 11.08.2009 DE 102009037124
(43) Veröffentlichungstag der Anmeldung: 20.06.2012
(73) Patentinhaber: Wincor Nixdorf International GmbH, 33106 Paderborn (DE)
(72) Erfinder: BAITZ, Günter, 13629 Berlin (DE)
(86) Internationale Anmeldenummer: PCT/EP2010/004158
(87) Internationale Veröffentlichungsnummer: WO 2011/018138

(56) Entgegenhaltungen:
- US-A- 5 252 814

## Beschreibung

Die Erfindung betrifft eine Vorrichtung zum optischen Abtasten einer auf einem Gegenstand aufgebrachten maschinenlesbaren Markierung mit einer Transporteinrichtung zum Transport des mit einer Unterseite auf der Transporteinrichtung abgestützten Gegenstands in eine Transportrichtung enthaltend ein erstes Transportband mit einem ersten Obertrum und ein zweites Transportband mit einem zweiten Obertrum, wobei ein Spalt zwischen dem ersten Transportband und dem in Transportrichtung vor dem ersten Transportband angeordneten zweiten Transportband gebildet ist, und mit einer Abtasteinrichtung zum Abtasten der maschinenlesbaren Markierung, wobei die Abtasteinrichtung wenigstens ein dem Spalt zugeordnetes Abtastelement aufweist.

Ferner betrifft die Erfindung ein Verfahren zur optischen Abtastung einer auf einem Gegenstand aufgebrachten maschinenlesbaren Markierung, wobei der mit einer Unterseite auf einer Transportvorrichtung abgestützte und in eine Transportrichtung transportierte Gegenstand von einem ersten Transportband der Transportvorrichtung enthaltend einen ersten Obertrum an ein zweites Transportband der Transportvorrichtung enthaltend einen zweiten Obertrum übergeben wird und wobei die Unterseite des Gegenstands bei der Übergabe mittels eines Abtastelements einer Abtasteinrichtung abgetastet wird, das einem zwischen dem ersten Transportband und dem in Transportrichtung vor dem ersten Transportband angeordneten zweiten Transportband gebildeten Spalts zugeordneten ist.

Üblicherweise werden die von einem Kunden ausgewählten Artikel (Gegenstände) an einem Kassenstand eines Verkaufsgeschäfts von einer Kassierperson einzeln erfasst, indem die maschinenlesbaren Markierungen der Gegenstände, beispielsweise ein Barcode, mittels eines als ein Markierungsleser dienende Abtasteinrichtung optisch abgetastet werden. Diese anstrengende, fehleranfällige und zeitraubende Arbeit kann durch einen automatischen Erfassungsvorgang erheblich vereinfacht werden, bei dem der Kunde die ausgewählten Gegenstände auf ein Transportband legt und die Gegenstände in einer Abtasteinrichtung automatisch gescannt werden. Problematisch wird diese Erfassung der Gegenstände allerdings dann, wenn die maschinenlesbare Markierung auf einer auf dem Transportband aufliegenden Unterseite des Gegenstands angebracht ist.

Aus der DE 101 41 429 C1 ist eine Vorrichtung zum optischen Abtasten der auf dem Gegenstand aufgebrachten maschinenlesbaren Markierung bekannt, mittels der auch die Unterseite des Gegenstands abgetastet werden kann. Die Vorrichtung weist hierzu eine Transporteinrichtung mit einem ersten Transportband und mit einem zweiten Transportband auf. Das erste Transportband und das zweite Transportband sind in Transportrichtung der Gegenstände derart beabstandet zueinander angeordnet, dass zwischen den einander zugewandten Stirnseiten der Transportbänder ein Spalt gebildet ist. Die Transportbänder sind hierbei auf einer gleichen Höhe bzw. in einer gemeinsamen Transportebene angeordnet. Auf einer dem Gegenstand abgewandten Seite des Spalts ist ein Abtastelement einer zur optischen Abtastung des gesamten Gegenstands dienenden Abtasteinrichtung angeordnet. Das Abtastelement erfasst die Unterseite des Gegenstands bei der Übergabe desselben von dem ersten Transportband an das zweite Transportband. Nachteilig hierbei ist, dass zur sicheren Erfassung der maschinenlesbaren Markierung mittels des Abtastelements ein horizontaler Abstand des ersten Transportbandes von dem zweiten Transportband vergleichsweise groß zu bemessen ist. Hierbei können insbesondere kleine Gegenstände durch den Spalt hindurchfallen. Eine Übergabe der Gegenstände von dem ersten Transportband an das zweite Transportband ist in diesem Fall nicht möglich. Das ebenfalls vorgeschlagene Vorsehen einer transparenten Abdeckung im Bereich des Spaltes löst das Problem ebenfalls nicht, weil im Bereich der Abdeckung insbesondere kleine Gegenstände weder auf dem ersten Transportband noch auf dem zweiten Transportband aufliegen und insofern nicht in Transportrichtung gefördert werden. Ein automatisches Erfassen der Gegenstände ist daher nicht gewährleistet. US 5 252 814 offenbart eine Vorrichtung gemäss dem Oberbegriff der unabhängigen Ansprüche.

Aufgabe der Erfindung ist es daher, eine Vorrichtung und ein Verfahren zum optischen Abtasten einer auf dem Gegenstand aufgebrachten maschinenlesbaren Markierung anzugeben, so dass die an einer auf dem Transportband aufliegenden Unterseite des Gegenstands angebrachte Markierung auch bei kleineren Gegenständen in einfacher Weise zuverlässig erfasst werden kann. Hierbei soll die Vorrichtung zugleich kostengünstig und robust ausgebildet sein.

Zur Lösung dieser Aufgabe ist die Erfindung gemäss den Ansprüche 1, 12 und 14 dargestellt.

Der besondere Vorteil der Erfindung besteht darin, dass durch die höhenversetzte Anordnung des ersten Obertrums und des zweiten Obertrums ein zum Abtasten der Unterseite des Gegenstands hinreichend breiter Spalt zwischen den Transportbändern auch dann ausgebildet werden kann, wenn kein oder nur ein sehr geringer horizontaler Abstand zwischen dem ersten Transportband und dem zweiten Transportband ausgebildet ist. Der Spalt weist hierbei nur eine äußerst geringe oder keine horizontale Spaltkomponente auf. Er wird im Wesentlichen durch eine horizontale Spaltkomponente definiert. Hierdurch können auch kleine Gegenstände zuverlässig und sicher von dem ersten Transportband an das zweite Transportband übergeben werden. Eine vollständig automatische Erfassung auch kleiner Gegenstände ist hierdurch gewährleistet.

Nach einer bevorzugten Ausführungsform der Erfindung bilden das erste Transportband und das zweite Transportband im Bereich des Spalts eine Stufe. Das Obertrum des ersten Transportbands ist oberhalb des Obertrums des zweiten Transportbands angeordnet. Durch das Vorsehen einer derartigen Stufe kippt der Gegenstand bei der Übergabe desselben von dem ersten Transportband auf das zweite Transportband allein aufgrund der Schwerkraft, das heißt selbsttätig. Die Übergabe wird hierdurch besonders einfach. Durch das Vorsehen spezieller Baugruppen bzw. Komponenten zur Übergabe des Gegenstands kann verzichtet werden.

Nach einer Weiterbildung der Erfindung ist ein Höhenversatz zwischen dem ersten Obertrum und dem zweiten Obertrum derart gewählt, dass bei der Übergabe eines vorderen Bereichs des Gegenstands an das zweite Transportband ein hinterer Bereich des Gegenstands noch an dem ersten Transportband abgestützt ist. Vorteilhaft wird hierdurch ein freier Fall des Gegenstands bei der Übergabe vermieden. Die mechanische Beanspruchung des Gegenstands bei der Übergabe wird reduziert, so dass einer Beschädigung des Gegenstands vorgebeugt ist. Dies ist insbesondere bei empfindlichen Gegenständen, beispielsweise Eiern, Gemüse, Porzellan- und Glaswaren oder empfindlichen elektronischen Bauteilen, von großer Bedeutung.

Nach einer Weiterbildung der Erfindung ist das Abtastelement derart angeordnet, dass mittels desselben die Unterseite des Gegenstands im gekippten Zustand wenigstens abschnittsweise abtastbar ist. Vorteilhaft kann durch eine geneigte Ausrichtung des Abtastelements, beispielsweise dessen Kippung gegenüber der Vertikalen, die Fehlerrate des Abtastprozesses reduziert und das Abtasten der maschinenlesbaren Markierung besonders zuverlässig gestaltet werden. Darüber hinaus kann der horizontale Abstand der Transportbänder durch die geneigte Anordnung des Abtastelements weiter reduziert werden.

Nach einer Weiterbildung der Erfindung können einander zugewandte Stirnseiten des ersten Transportbands und des zweiten Transportbands in Transportrichtung zumindest abschnittsweise überlappend angeordnet sein. Durch die überlappende Anordnung der Stirnseiten wird auf eine Ausbildung einer horizontalen Spaltkomponente vollständig verzichtet. Statt eines horizontalen Abstands zwischen dem ersten Transportband und dem zweiten Transportband ist in diesem Fall eine horizontale Überlappung derselben ausgebildet. Vorteilhaft wird durch die Überlappung vermieden, dass insbesondere kleine Gegenstände in den Spalt zwischen dem ersten Transportband und dem Transportband fallen und hierbei beschädigt werden, verlorengehen bzw. ihrerseits das unterhalb des Spalts angeordnetes Abtastelement beschädigen.

Nach einer Weiterbildung der Erfindung ist ein dem ersten Transportband zugewandtes Ende des zweiten Obertrums in Transportrichtung vor einem dem zweiten Transportband zugewandten Ende des ersten Transportbands angeordnet. Hierdurch weist der Spalt eine horizontale Spaltkomponente auf. Die Positionierung des Abtastelements auf der dem Gegenstand abgewandten Seite des Spalts kann hierdurch in besonders einfacher Weise erfolgen.

Nach einer Weiterbildung der Erfindung ist im Bereich des Spalts als Teil der Transporteinrichtung eine transparente Abdeckung mit einer gegenüber der Horizontalen geneigt orientierten Schrägfläche angeordnet. Entlang dieser Schrägfläche ist der Gegenstand bei der Übergabe von dem ersten Transportband an das zweite Transportband führbar. Durch das Vorsehen einer entsprechenden Abdeckung lässt sich zum einen zuverlässig verhindern, dass auch kleine Gegenstände in den zwischen dem ersten Transportband und dem zweiten Transportband gebildeten Spalt fallen. Dies ist vornehmlich - aber nicht ausschließlich - dann vorteilhaft, wenn der Spalt eine horizontale Spaltkomponente aufweist. Zum anderen wird die mechanische Belastung des Gegenstands bei der Übergabe durch das Vorsehen der Abdeckung weiter reduziert. Der Gegenstand kann auf der Schrägfläche der Abdeckung gleiten bzw. rutschen. Ebenfalls ist es möglich, dass insbesondere eine gebogene Außenfläche aufweisende Gegenstände, beispielsweise Flaschen, Konservendosen oder dergleichen, auf der Schrägfläche abrollen. Während des Abrollvorgangs kann von dem Abtastelement wenigstens ein Teil der Mantelfläche des rollenden Gegenstands optisch abgetastet werden.

Nach einer Weiterbildung der Erfindung ist die Schrägfläche der Abdeckung im Wesentlichen senkrecht zu einer optischen Achse des Abtastelements angeordnet. Vorteilhaft wird hierdurch die Fehlerrate des Abtastelements reduziert und eine besonders zuverlässige Abtastung der maschinenlesbaren Markierung gewährleistet.

Nach einer Weiterbildung der Erfindung grenzen die einander zugeordneten Enden des ersten Obertrums und des zweiten Obertrums unmittelbar an die Abdeckung an. Vorteilhaft wird hierdurch die Klemmgefahr reduziert, so dass auch bei einer automatischen, unbeaufsichtigten Nutzung der Vorrichtung durch einen ungeschulten Kunden ein sicherer Betrieb derselben gewährleistet ist.

Nach einer Weiterbildung der Erfindung weist das Abtastelement einen Abstand zu dem Spalt bzw. zu der Abdeckung im Bereich von 3 mm bis 100 mm auf. Erfahrungsgemäß arbeiten handelsübliche Abtastelemente in diesem Abstandsbereich besonders zuverlässig, so dass die für die automatische Erfassung der Gegenstände erforderliche hohe Zuverlässigkeit gewährleistet werden kann.

Zur Lösung der Aufgabe ist die Erfindung in Verbindung mit dem Oberbegriff des Patentanspruchs 18 dadurch gekennzeichnet, dass der Gegenstand bei der Übergabe von dem ersten Transportband an das zweite Transportband aufgrund eines Höhenversatzes der Obertrums des ersten Transportbands und des zweiten Transportbands gekippt wird.

Der besondere Vorteil der Erfindung besteht darin, dass durch die Kippung des Gegenstands bei der Übergabe und durch das Vorsehen eines Höhenversatzes eine Unterseite des Gegenstands zuverlässig abgetastet werden kann. Der Spalt muss hierzu nur eine geringe bzw. gar keine horizontale Spaltkomponente aufweisen, so dass eine automatische Erfassung auch besonders kleiner Gegenstände mittels der Vorrichtung zuverlässig gewährleistet ist. Ein Hereinfallen der kleinen Gegenstände in dem Spalt wird zuverlässig vermieden.

Weitere Vorteile der Erfindung ergeben sich aus den weiteren Unteransprüchen.

Ausführungsbeispiele der Erfindung werden nachfolgend anhand der Figuren näher erläutert.

Es zeigen:

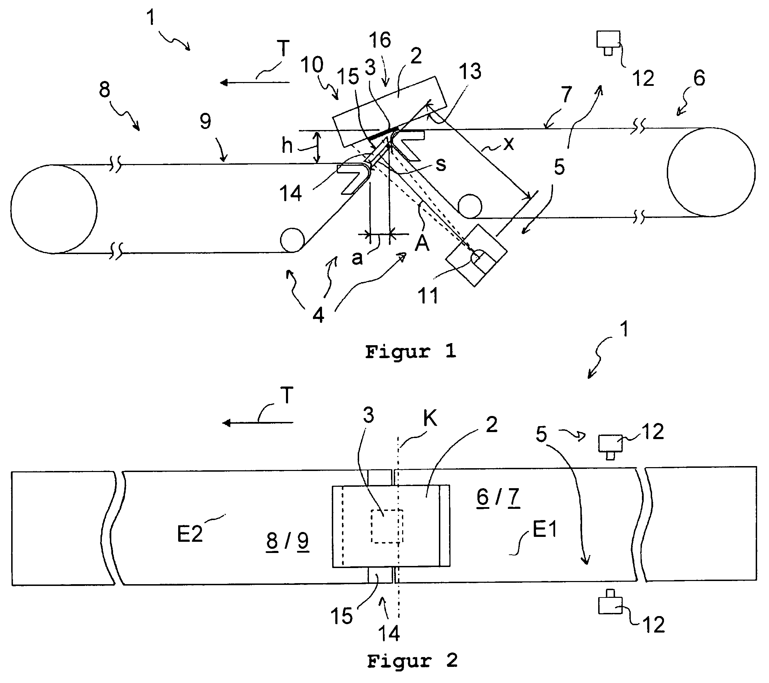

- Figur 1: eine Seitenansicht einer erfindungsgemäßen Vorrichtung in einer ersten Ausführungsform,
- Figur 2: eine Draufsicht auf die Vorrichtung gemäß Figur 1 und
- Figur 3: eine Seitenansicht einer zweiten Ausführungsform der Vorrichtung.

Eine Vorrichtung 1 zum optischen Abtasten einer auf einem Gegenstand 2 aufgebrachten maschinenlesbaren Markierung 3 weist als wesentliche Funktionsmodule eine Transporteinrichtung 4 und Abtasteinrichtung 5 auf. Derartige Vorrichtungen 1 werden beispielsweise vom Einzelhandel in Kassenständen zur Warenerfassung und anschließenden Preisbestimmung eingesetzt. Insbesondere kommen sie bei dem so genannten Selfcheckout zur Anwendung, bei dem die Waren des Kunden maschinell, das heißt automatisch und nicht von einer Kassierperson gescannt werden.

Die Transporteinheit 4 weist ein umlaufendes, endloses erstes Transportband 6 mit einem ersten Obertrum 7 und ein in einer Transportrichtung T gesehen vor dem ersten Transportband 6 angeordnetes umlaufendes, endloses zweites Transportband 8 mit einem zweiten Obertrum 9 auf. Das erste Transportband 6 ist derart beabstandet von dem zweiten Transportband 8 angeordnet, dass zwischen den Transportbändern 6, 7 ein Spalt 10 gebildet ist.

Das Obertrum 7 des ersten Transportbands 6 und das Obertrum 9 des zweiten Transportbands 8 sind höhenversetzt zueinander angeordnet. Hierdurch ist zwischen dem ersten Transportband 6 und dem zweiten Transportband 8 im Bereich des Spalts 10 eine Stufe gebildet, wobei das erste Obertrum 7 um einen Höhenversatz h oberhalb des zweiten Obertrums 9 angeordnet ist. Ferner sind das erste Transportband 6 und das zweite Transportband 8 um einen horizontalen Abstand a beabstandet angeordnet. Der horizontale Abstand a der Transportbänder 6, 8 definiert hierbei eine horizontale Spaltkomponente des Spalts 10. Ein dem ersten Transportband 6 zugewandtes Ende des zweiten Transportbands 8 ist in Transportrichtung T gesehen vor einem dem zweiten Transportband 8 zugewandten Ende des ersten Transportbands 6 angeordnet.

Die Abtasteinrichtung 5 weist ein Abtastelement 11 auf. Das Abtastelement 11 ist dem Spalt 10 bei der Übergabe des Gegenstands 2 auf einer dem Gegenstand 2 abgewandten Seite zugeordnet. Die Abtasteinrichtung 5 umfasst ferner eine Anzahl weiterer Abtastelemente 12, die seitlich und oberhalb des ersten Transportbands 6 angeordnet sind. Das dem Spalt 10 zugeordnete Abtastelement 11 dient dazu, eine Unterseite 13 des Gegenstands 2 im Bereich des Spalts 10 optisch abzutasten. Die weiteren Abtastelemente 12 erfassen die nicht auf der Transporteinrichtung 4 aufliegenden weiteren Seitenflächen des Gegenstands 2, so dass dieser von der Transporteinrichtung 5 vollumfänglich abgetastet werden kann. Als Abtastelemente 11, 12 können eine Vielzahl unterschiedlicher optischer Sensoren eingesetzt werden, mittels derer die maschinenlesbare Markierung 3 des Gegenstands 2 erfasst werden kann. Beispielsweise sind Scanner, insbesondere Linienscanner, Fotoelementzeilen oder Kameras als Abtastelemente 11, 12 geeignet. Alle oder einige der Abtastelemente 11, 12 können in einer gemeinsamen Baugruppe, beispielsweise einem Tunnelscanner angeordnet sein.

Im Bereich des Spalts 10 ist zwischen dem ersten Transportband 6 und dem zweiten Transportband 8 eine Abdeckung 14 angeordnet, die unmittelbar an das dem zweiten Transportband 8 zugewandte Ende des ersten Obertrums 7 und das dem ersten Transportband 6 zugewandte Ende des zweiten Obertrums 9 angrenzt. Die Abdeckung 14 weist auf einer dem Abtastelement 11 abgewandten und bei der Übergabe dem Gegenstand 2 zugewandten Seite eine Schrägfläche 15 auf, die gegenüber der Horizontalen sowie einer von dem Obertrum 7 definierten ersten Transportebene E1 und einer von dem zweiten Obertrum 9 definierten zweiten Transportebene E2 geneigt angeordnet ist. Bei der Übergabe des Gegenstands 2 von dem ersten Transportband 6 an das zweite Transportband 8 ist dieser entlang der Schrägfläche 15 führbar. Um eine optische Abtastung der Unterseite 3 des Gegenstands 2 durch die Abdeckung 14 hindurch zu gewährleisten, ist die Abdeckung 14 transparent ausgeführt. Sie besteht zumindest abschnittsweise bevorzugt aus Hartglas, Acryl oder einem anderen, hinreichend transparenten sowie chemisch und mechanisch widerstandsfähigen Werkstoff.

Das Abtastelement 11 zur Abtastung der Unterseite 13 des Gegenstands 2 ist unterhalb des Spalts 10 derart angeordnet, dass die Unterseite 3 des Gegenstands 2 bei der Übergabe desselben von dem ersten Transportband 6 an das zweite Transportband 8 durch den Spalt 10 hindurch abgetastet werden kann. Eine optische Achse A des Abtastelements 11 ist im Wesentlichen senkrecht zu der Schrägfläche 15 der Abdeckung 14 ausgerichtet. Das Abtastelement 11 weist einen Abstand x von dem Spalt 10 bzw. der Abdeckung 14 auf, der kleiner ist als 500 mm und bevorzugt in einem Bereich zwischen 3 mm und 100 mm liegt.

Das erste Obertrum 7 und das zweite Obertrum 9 sind im vorliegenden Ausführungsbeispiel horizontal orientiert angeordnet. Hierdurch ist gewährleistet, dass der Gegenstand 2 während des Transports stabil abgestützt ist und nicht von der Transporteinrichtung 4 herunterruscht bzw. rollt.

Aufgrund des Höhenversatzes h zwischen dem ersten Obertrum 7 und dem zweiten Obertrum 8 wird der Gegenstand 2 bei der Übergabe desselben von dem ersten Transportband 6 zu dem zweiten Transportband 8 gekippt. Das Abtastelement 11 ist derart unterhalb des Spalts 10 angeordnet, dass während dieser Kippung die Unterseite 13 des Gegenstands 2 abgetastet werden kann. Um dies zu ermöglichen, ist durch den Höhenversatz h der Obertrums 7, 9 und den horizontalen Abstand a der Spalt 10 mit optisch nutzbaren Spaltbreite s definiert. Die Spaltbreite s ist konstruktiv so festgelegt, dass die auf der Unterseite 13 des Gegenstands 2 aufgebrachte maschinenlesbare Markierung 3 von dem Abtastelement 11 unabhängig von der Orientierung des Gegenstands 2 auf der Transporteinrichtung 4 bei Übergang desselben von dem ersten Transportband 6 an das zweit Transportband 8 auslesbar ist. Der Höhenversatz h ist hierbei vorteilhaft so gewählt, dass bei der Übergabe des vorderen Bereichs des Gegenstands 2 an das zweiten Transportband 8 der hintere Bereich des Gegenstands 2 noch das erste Transportband 6 berührt.

Bei der Übergabe des Gegenstands 2 von dem ersten Transportband 6 an das zweite Transportband 8 kippt der Gegenstand 2 um eine Kippachse K, die im vorliegenden Ausführungsbeispiel horizontal sowie quer zur Transportrichtung T des Gegenstands 2 orientiert ist. Abhängig von der Größe des Gegenstands 2, dem Höhenversatz h sowie der konkreten geometrischen Gestaltung einer dem zweiten Transportband 8 zugewandten Stirnseite 16 des ersten Transportbands 6 verschiebt sich die Lage der Kippachse K während der Kippung. Die Kippachse K ist allgemein definiert durch die Berührlinie zwischen dem ersten Transportband 6 und dem Gegenstand 2 bei der Übergabe desselben an das zweite Transportband 8.

Zur automatischen Erfassung der maschinenlesbaren Markierung 3 des Gegenstands 2 wird dieser zunächst mit seiner Unterseite 13 auf das erste Obertrum 7 der Transporteinrichtung 4 aufgelegt. Sofern der Gegenstand 2 auf der dem Spalt 10 abgewandten Seite der weiteren Abtastelemente 12 auf das erste Obertrum 7 aufgelegt wird, können während des Transports des Gegenstands 2 in Transportrichtung T die nicht auf der Transporteinrichtung aufliegenden Seitenflächen des Gegenstands 2 von den weiteren Abtastelementen 12 abgetastet werden. Bei dem Transport des Gegenstands 2 in Transportrichtung T wird derselbe im Bereich des Spalts 10 von dem ersten Transportband 6 an das zweite Transportband 8 übergeben. Bei der Übergabe wird die Unterseite 13 des Gegenstands 2 mittels des Abtastelements 11 der Abtasteinrichtung 5 abgetastet und der Gegenstand 2 aufgrund des Höhenversatzes h zwischen dem ersten Obertrum 7 und dem zweiten Obertrum 9 gekippt, wobei Gegenstand 2 unter Einwirkung der Schwerkraft selbsttätig von dem ersten Obertrum 7 an das unterhalb des ersten Obertrums 7 angeordnete zweite Obertrum 9 übergeben wird. Das auf der dem Gegenstand 2 abgewandten Seite des Spalts 10 angeordnete Abtastelement 11 tastet hierbei die Unterseite 13 des Gegenstands 2 ab. Da im Bereich des Spalts 10 die transparente Abdeckung 14 angeordnet ist, kann der Gegenstand 2 mit seiner Unterseite 13 bei der Übergabe von dem ersten Obertrum 7 an das zweite Obertrum 9 zumindest abschnittsweise entlang der Schrägfläche 15 der Abdeckung 14 geführt werden. Nach der Übergabe des Gegenstands 2 wird dieser von dem zweiten Transportband 8 weiter in Transportrichtung T transportiert.

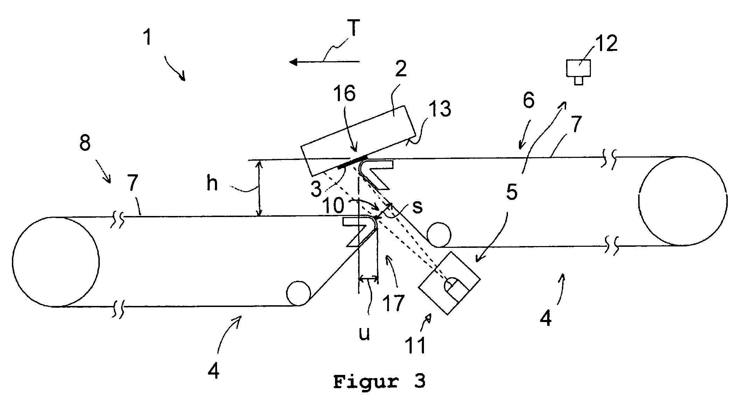

Nach einer weiteren Ausführungsform der Erfindung gemäß Figur 3 sind einander zugewandte Stirnseiten 16, 17 des ersten Transportbands 6 und des zweiten Transportbands 8 in Transportrichtung T zumindest abschnittsweise überlappend angeordnet. Auch in diesem Ausführungsbeispiel wird trotzt des Fehlens eines horizontalen Abstands a aufgrund des Höhenversatzes h zwischen dem ersten Obertrum 7 und dem zweiten Obertrum 7 ein Spalt 10 mit der Spaltbreite s ausgebildet. Eine Überlappung u der Transportbänder 6, 8 in horizontaler Richtung und der Höhenversatz h sind derart gewählt, dass die Unterseite 13 des Gegenstands 2 durch den Spalt 10 von dem Abtastelement 11 abgetastet werden kann.

Gleiche Bauteile und Bauteilfunktionen der Ausführungsbeispiele sind mit den gleichen Bezugsziffern versehen.

Infolge der Überdeckung der Stirnseiten 16, 17 kann der Gegenstand 2 bei der Übergabe von dem ersten Transportband 6 an das zweite Transportband 8 nicht in den Spalt hineinfallen. Aus diesem Grund kann auf das Vorsehen einer Abdeckung 14 verzichtet werden. Dieser Verzicht ist optional, das heißt in einem anderen Ausführungsbeispiel kann trotz einer überlappenden Anordnung der Transportbänder 6, 8 eine Abdeckung 14 vorgesehen sein.

Nach einer alternativen, nicht dargestellten Ausführungsform der Erfindung können unterhalb des Spalts 10 eine Anzahl von Abtastelementen 11 zur Abtastung der Unterseite 13 des Gegenstands 2 angeordnet sein. Die optische Achse A des Abtastelements 11 braucht nicht im Wesentlichen senkrecht zu der gegenüber der Horizontalen geneigt angeordneten Schrägfläche 15 der Abdeckung 14 ausgerichtet sein.

Nach einer weiteren, nicht dargestellten und zur Erfindung gehörigen Ausführungsform der Vorrichtung 1 enthält die Transporteinrichtung 4 ein erstes Transportband 6 mit einem Obertrum 7 und einem Bevorratungsbehältnis, in dem Gegenstände 2 bevorratet und zur Übergabe an den Kunden bereitgestellt werden können. Zwischen dem in Transportrichtung T vor dem ersten Transportband 6 angeordneten Bevorratungsbehältnis und dem ersten Transportband 6 ist ein Spalt 10 gebildet. Ferner weist die Vorrichtung 1 eine Abtasteinrichtung 5 zum Abtasten der maschinenlesbaren Markierung 3 auf, wobei die Abtasteinrichtung 5 wenigstens ein Abtastelement 11 aufweist, welches dem Spalt 10 auf einer dem Gegenstand 2 abgewandten Seite zugeordnet ist. Das Obertrum 7 des ersten Transportbands 6 und das Bevorratungsbehältnis sind derart höhenversetzt angeordnet, dass durch Kippung des Gegenstands 2 bei der Übergabe von dem ersten Transportband 6 an das Bevorratungsbehältnis die Unterseite 13 des Gegenstands 2 durch das Abtastelement 11 abtastbar ist. Auch hier kann im Bereich des Spalts 10 als Teil der Transporteinrichtung 4 eine transparente Abdeckung 14 mit einer gegenüber der Horizontalen geneigt orientierten Schrägfläche 15 angeordnet sein, entlang derer der Gegenstand 2 bei der Übergabe von dem ersten Transportband 6 an das Bevorratungsbehältnis führbar ist. Das Bevorratungsbehältnis kann hierbei zumindest abschnittsweise als eine Warenrutsche ausgebildet sein.

**Bezugszeichenliste**

| | | | |
|---|---|---|---|
| 1 | Vorrichtung | T | Transportrichtung |
| 2 | Gegenstand | u | Überlappung |
| 3 | Markierung | x | Abstand |
| 4 | Transporteinrichtung | | |
| 5 | Abtasteinrichtung | | |
| 6 | erstes Transportband | | |
| 7 | erstes Obertrum | | |
| 8 | zweites Transportband | | |
| 9 | zweites Obertrum | | |
| 10 | Spalt | | |
| 11 | Abtastelement | | |
| 12 | weitere Abtastelemente | | |
| 13 | Unterseite | | |
| 14 | Abdeckung | | |
| 15 | Schrägfläche | | |
| 16 | Stirnseite | | |
| 17 | Stirnseite | | |
| | | | |
| a | horizontaler Abstand | | |
| A | optische Achse | | |
| E1 | erste Transportebene | | |
| E2 | zweite Transportebene | | |
| h | Höhenversatz | | |
| K | Kippachse | | |
| s | Spaltbreite | | |

## Patentansprüche

1. Vorrichtung zum optischen Abtasten einer auf einem Gegenstand aufgebrachten maschinenlesbaren Markierung mit einer Transporteinrichtung zum Transport des mit einer Unterseite auf der Transporteinrichtung abgestützen Gegenstands in eine Transportrichtung enthaltend ein erstes Transportband mit einem ersten Obertrum und ein zweites Transportband mit einem zweiten Obertrum, wobei ein Spalt zwischen dem ersten Transportband und dem in Transportrichtung vor dem ersten Transportband angeordneten zweiten Transportband gebildet ist, und mit einer Abtasteinrichtung zum Abtasten der maschinenlesbaren Markierung, wobei die Abtasteinrichtung wenigstens ein dem Spalt zugeordnetes Abtastelement aufweist, wobei das erste Obertrum (7) und das zweite Obertrum (9) derart höhenversetzt zueinander angeordnet sind, dass durch Kippung des Gegenstands (2) bei der Übergabe von dem ersten Transportband (6) zu dem zweiten Transportband (8) die Unterseite (13) des Gegenstands (2) durch das Abtastelement (11) abtastbar ist,
**dadurch gekennzeichnet, dass**
einander zugewandte Stirnseiten (16, 17) des ersten Transportbands (6) und des zweiten Transportbands (8) in Transportrichtung (T) zumindest abschnittsweise überlappend angeordnet sind, wobei das erste Transportband (6) und das zweite Transportband (8) im Bereich des Spalts (10) eine Stufe bilden, wobei das erste Obertrum (7) oberhalb des zweiten Obertrums (9) angeordnet ist.

2. Vorrichtung nach Anspruch 1, **dadurch gekennzeichnet, dass** ein Höhenversatz (h) des ersten und zweiten Obertrums (7, 9) derart gewählt ist, dass bei der Übergabe eines vorderen Bereichs des Gegenstands (2) an das zweite Transportband (8) ein hinterer Bereich des Gegenstands (2) noch das erste Transportband (6) berührt.

3. Vorrichtung nach Anspruch 1, **dadurch gekennzeichnet, dass** das Abtastelement (11) derart angeordnet ist, das mittels desselben die Unterseite (13) des gekippten Gegenstands (2) wenigstens abschnittsweise abtastbar ist.

4. Vorrichtung nach einem der Ansprüche 1 bis 3, **dadurch gekennzeichnet, dass** der Gegenstand (2) bei der Übergabe von dem ersten Transportband (6) an das zweite Transportband (8) um eine horizontale und/oder um eine quer zur Transportrichtung (T) orientierte und/oder um eine in einer von dem ersten Obertrum (7) bzw. dem zweiten Obertrum (9) definierten Transportebene (E1, E2) liegende Kippachse (K) gekippt ist.

5. Vorrichtung nach einem der Ansprüche 1 bis 4, **dadurch gekennzeichnet, dass** eine dem zweiten Transportband (8) zugewandtes Ende des ersten Obertrums (7) in Transportrichtung (T) vor einem dem ersten Transportband (6) zugewandten Ende des zweiten Obertrums (9) angeordnet ist.

6. Vorrichtung nach einem der Ansprüche 1 bis 5, **dadurch gekennzeichnet, dass** das dem ersten Transportband (6) zugewandte Ende des zweiten Obertrums (9) in Transportrichtung (T) vor dem zweiten Transportband (8) zugewandten Ende des ersten Obertrum (7) angeordnet ist.

7. Vorrichtung nach einem der Ansprüche 1 bis 6, **dadurch gekennzeichnet, dass** eine Spaltbreite (s) des Spalts (10) durch den Höhenversatz (h) und einen horizontalen Abstand (a) oder eine horizontale Überdeckung (u) des dem zweiten Transportband (8) zugewandten Endes des ersten Obertrums (7) und des dem ersten Transportband (6) zugewandten Endes des zweiten Obertrums (9) derart definiert ist, dass die auf der Unterseite (13) des Gegenstands (2) aufgebrachte maschinenlesbare Markierung (3) durch das Abtastelement (11) unabhängig von der Orientierung des Gegenstands (2) auf der Transporteinheit (4) auslesbar ist.

8. Vorrichtung nach einem der Ansprüche 1 bis 7, **dadurch gekennzeichnet, dass** das Abtastelement (11) einen Abstand (x) zwischen 3 mm und 100 mm von dem Spalt (10) bzw. der Abdeckung (14) aufweist.

9. Vorrichtung nach einem der Ansprüche 1 bis 8, **dadurch gekennzeichnet, dass** die Abtasteinrichtung (5) wenigstens ein weiteres, auf den Gegenstand (2) ausgerichtetes Abtastelement (12) aufweist, welches oberhalb und/oder seitlich beabstandet zu der Transporteinrichtung (4) angeordnet sind zur Abtastung von nicht auf der Transporteinrichtung (4) aufliegenden Seitenflächen des Gegenstands (2).

10. Vorrichtung nach einem der Ansprüche 1 bis 9, **dadurch gekennzeichnet, dass** das erste Obertrum (7)und/oder das zweite Obertrum (9) horizontal orientiert angeordnet ist.

11. Vorrichtung nach einem der Ansprüche 1 bis 10, **dadurch gekennzeichnet, dass** die Abtasteinrichtung (5) einen Linienscanner, eine Fotoelementzeile oder eine Kamera aufweist.

12. Verfahren zur optischen Abtastung einer auf einem Gegenstand aufgebrachten maschinenlesbaren Markierung, wobei der mit einer Unterseite auf einer Transportvorrichtung abgestützte und in eine Transportrichtung transportierte Gegenstand von einem ersten Transportband der Transportvorrichtung enthaltend einen ersten Obertrum an ein zweites Transportband der Transportvorrichtung enthaltend einen zweiten Obertrum übergeben wird und wobei die Unterseite des Gegenstands bei der Übergabe mittels eines Abtastelements einer Abtasteinrichtung abgetastet wird, das einem zwischen dem ersten Transportband und dem in Transportrichtung vor dem ersten Transportband angeordneten zweiten Transportband gebildeten Spalts zugeordnet ist, wobei der Gegenstand (2) bei der Übergabe von dem ersten Transportband (6) an das zweite Transportband (8) aufgrund eines Höhenversatzes (h) des ersten Obertrums (7) und des zweiten Obertrums (9) gekippt wird zur Abtastung der Unterseite des Gegenstands (2) mittels des Abtastelements (11),
**dadurch gekennzeichnet, dass**
ein Höhenversatz (h) des ersten und zweiten Obertrums (7, 9) derart gewählt ist, dass bei der Übergabe eines vorderen Bereichs des Gegenstands (2) an das zweite Transportband (8) ein hinterer Bereich des Gegenstands (2) noch das erste Transportband (6) berührt,
oder dass
einander zugewandte Stirnseiten (16, 17) des ersten Transportbands (6) und des zweiten Transportbands (8) in Transportrichtung (T) zumindest abschnittsweise überlappend angeordnet sind, wobei das erste Transportband (6) und das zweite Transportband (8) im Bereich des Spalts (10) eine Stufe bilden, wobei das erste Obertrum (7) oberhalb des zweiten Obertrums (9) angeordnet ist.

13. Verfahren nach Anspruch 12, **dadurch gekennzeichnet, dass** der Gegenstand (2) unter Einwirkung der Schwerkraft selbsttätig von dem ersten Obertrum (7) an das unterhalb desselben angeordnete zweite Obertrum (8) übergeben wird.

14. System umfassend
ein Gegenstand mit darauf aufgebrachten Maschinenlesbaren Markierung und
eine Vorrichtung zum optischen Abtasten der auf dem Gegenstand aufgebrachten maschinenlesbaren Markierung mit einer Transporteinrichtung zum Transport des mit einer Unterseite auf der Transporteinrichtung abgestützen Gegenstands in eine Transportrichtung enthaltend ein erstes Transportband mit einem ersten Obertrum und ein zweites Transportband mit einem zweiten Obertrum, wobei ein Spalt zwischen dem ersten Transportband und dem in Transportrichtung vor dem ersten Transportband angeordneten zweiten Transportband gebildet ist, und mit einer Abtasteinrichtung zum Abtasten der maschinenlesbaren Markierung, wobei die Abtasteinrichtung wenigstens ein dem Spalt zugeordnetes Abtastelement aufweist,
**dadurch gekennzeichnet, dass**
ein Höhenversatz (h) des ersten und zweiten Obertrums (7, 9) derart gewählt ist, dass bei der Übergabe eines vorderen Bereichs des Gegenstands (2) an das zweite Transportband (8) ein hinterer Bereich des Gegenstands (2) noch das erste Transportband (6) berührt.

## Claims

1. Device for optically scanning a machine-readable marking applied to an object, comprising a transport apparatus for transporting the object, supported with an underside on the transport apparatus, in a transport direction, containing a first transport belt having a first upper strand and a second transport belt having a second upper strand, a gap being formed between the first transport belt and the second transport belt, arranged before the first transport belt in the transport direction, and having a scanning apparatus for scanning the machine-readable marking, the scanning apparatus having at least one scanning element assigned to the gap, the first upper strand (7) and the second upper strand (9) being arranged with a height offset in relation to each other such that, by tilting the object (2) during the transfer from the first transport belt (6) to the second transport belt (8), the underside (13) of the object (2) can be scanned by the scanning element (11),
**characterized in that**
ends (16, 17) of the first transport belt (6) and of the second transport belt (8) that face each other are arranged to overlap, at least in some sections, in the transport direction (T), wherein the first transport belt (6) and the second transport belt (8) form a step in the region of the gap (10), wherein the first upper strand (7) is arranged above the second upper strand (9).

2. Device according to Claim 1, **characterized in that** a height offset (h) of the first and second upper strands (7, 9) is chosen in such a way that, during the transfer of a front region of the object (2) to the second transport belt (8), a rear region of the object (2) is still touching the first transport belt (6).

3. Device according to Claim 1, **characterized in that** the scanning element (11) is arranged in such a way that, by means of the same, at least some sections of the underside (13) of the tilted object (2) can be scanned.

4. Device according to one of Claims 1 to 3, **characterized in that**, during the transfer from the first transport belt (6) to the second transport belt (8), the object (2) is tilted about a tilt axis (K) which is horizontal and/or oriented transversely with respect to the transport direction (T) and/or is located in a transport plane (E1, E2) defined by the first upper strand (7) or the second upper strand (9).

5. Device according to one of Claims 1 to 4, **characterized in that**, in the transport direction (T), an end of the first upper strand (7) that faces the second transport belt (8) is arranged before an end of the second upper strand (9) that faces the first transport belt (6).

6. Device according to one of Claims 1 to 5, **characterized in that**, in the transport direction (T), the end of the second upper strand (9) that faces the first transport belt (6) is arranged before the end of the first upper strand (7) that faces the second transport belt (8).

7. Device according to one of Claims 1 to 6, **characterized in that** a gap width (s) of the gap (10) is defined by the height offset (h) and a horizontal distance (a) or a horizontal overlap (u) of the end of the first upper strand (7) that faces the second transport belt (8) and of the end of the second upper strand (9) that faces the first transport belt (6), in such a way that the machine-readable marking (3) applied to the underside (13) of the object (2) can be read by the scanning element (11) irrespective of the orientation of the object (2) on the transport unit (4).

8. Device according to one of Claims 1 to 7, **characterized in that** the scanning element (11) has a distance (x) from the gap (10) or the cover (14) that is between 3 mm and 100 mm.

9. Device according to one of Claims 1 to 8, **characterized in that** the scanning apparatus (5) has at least one further scanning element (12) which is aimed at the object (2) and which is arranged above and/or at a lateral distance from the transport apparatus (4) in order to scan side surfaces of the object (2) not resting on the transport apparatus (4).

10. Device according to one of Claims 1 to 9, **characterized in that** the first upper strand (7) and/or the second upper strand (9) are arranged to be oriented horizontally.

11. Device according to one of Claims 1 to 10, **characterized in that** the scanning apparatus (5) has a line scanner, a row of photo-elements or a camera.

12. Method for optically scanning a machine-readable marking applied to an object, the object supported with an underside on a transport apparatus and transported in a transport direction being transferred from a first transport belt of the transport apparatus, containing a first upper strand, to a second transport belt of the transport apparatus, containing a second upper strand, and the underside of the object being scanned during the transfer by means of a scanning element of a scanning apparatus, which is assigned to a gap formed between the first transport belt and the second transport belt, arranged before the first transport belt in the transport direction, the object (2) being tilted during the transfer from the first transport belt (6) to the second transport belt (8) on account of a height offset (h) of the first upper strand (7) and of the second upper strand (9), in order to scan the underside of the object (2) by means of the scanning element (11),
**characterized in that**
a height offset (h) of the first and second upper strand (7, 9) is chosen in such a way that, during the transfer of a front region of the object (2) to the second transport belt (8), a rear region of the object (2) is still touching the first transport belt (6),
or **in that**
ends (16, 17) of the first transport belt (6) and of the second transport belt (8) that face each other are arranged to overlap, at least in some sections, in the transport direction (T), wherein the first transport belt (6) and the second transport belt (8) form a step in the region of the gap (10), wherein the first upper strand (7) is arranged above the second upper strand (9).

13. Method according to Claim 12, **characterized in that** the object (2) is transferred automatically from the first upper strand (7) to the second upper strand (8), arranged underneath the same, under the action of gravity.

14. System comprising
an object with machine-readable marking applied thereto, and
a device for optically scanning the machine-readable marking applied to the object, comprising a transport apparatus for transporting the object, supported with an underside on the transport apparatus, in a transport direction, containing a first transport belt having a first upper strand and a second transport belt having a second upper strand, a gap being formed between the first transport belt and the second transport belt, arranged before the first transport belt in the transport direction, and having a scanning apparatus for scanning the machine-readable marking, the scanning apparatus having at least one scanning element assigned to the gap,
**characterized in that**
a height offset (h) of the first and second upper strand (7, 9) is chosen in such a way that, during the transfer of a front region of the object (2) to the second transport belt (8), a rear region of the object (2) is still touching the first transport belt (6).

## Revendications

1. Dispositif de balayage optique d'un repère lisible par machine appliqué sur un objet, comportant un dispositif de transport pour transporter l'objet reposant par une face inférieure sur le dispositif de transport dans une direction de transport, qui comporte une première bande transporteuse présentant un premier brin supérieur et une deuxième bande transporteuse présentant un deuxième brin supérieur, dans lequel une fente est formée entre la première bande transporteuse et la deuxième bande transporteuse disposée avant la première bande transporteuse dans la direction de transport, et comportant un dispositif de balayage pour balayer le repère lisible par machine, dans lequel le dispositif de balayage présente au moins un élément palpeur associé à la fente, dans lequel le premier brin supérieur (7) et le deuxième brin supérieur (9) sont disposés avec un décalage en hauteur l'un par rapport à l'autre de manière à ce que, par pivotement de l'objet (2) lors du transfert de la première bande transporteuse (6) à la deuxième bande transporteuse (8), la face inférieure (13) de l'objet (2) puisse être balayée par l'élément palpeur (11),
**caractérisé en ce que** les faces avant tournées l'une vers l'autre (16, 17) de la première bande transporteuse (6) et de la deuxième bande transporteuse (8) sont disposées de manière à se chevaucher au moins par endroits dans la direction de transport (T), dans lequel la première bande transporteuse (6) et la deuxième bande transporteuse (8) forment un étage dans la région de la fente (10), dans lequel le premier brin supérieur (7) est disposé au-dessus du deuxième brin supérieur (9).

2. Dispositif selon la revendication 1, **caractérisé en ce qu'**un décalage en hauteur (h) des premier et deuxième brins supérieurs (7, 9) est sélectionné de manière à ce que, lors du transfert d'une région avant de l'objet (2) à la deuxième bande transporteuse (8), une région arrière de l'objet (2) soit encore en contact avec la première bande transporteuse (6).

3. Dispositif selon la revendication 1, **caractérisé en ce que** l'élément palpeur (11) est disposé de manière à ce que la face inférieure (13) de l'objet pivoté (2) puisse être balayée au moins par endroits au moyen de celui-ci.

4. Dispositif selon l'une quelconque des revendications 1 à 3, **caractérisé en ce que** l'objet (2), lors du transfert de la première bande transporteuse (6) à la deuxième bande transporteuse (8), est pivoté autour d'un axe de pivotement (K) horizontal et/ou orienté transversalement à la direction de transport (T) et/ou situé dans un plan de transport (E1, E2) défini par le premier brin supérieur (7) ou le deuxième brin supérieur (9).

5. Dispositif selon l'une quelconque des revendications 1 à 4, **caractérisé en ce qu'**une extrémité tournée vers la deuxième bande transporteuse (8) du premier brin supérieur (7) est disposée avant une extrémité tournée vers la première bande transporteuse (6) du deuxième brin supérieur (9) dans la direction de transport (T).

6. Dispositif selon l'une quelconque des revendications 1 à 5, **caractérisé en ce que** l'extrémité tournée vers la première bande transporteuse (6) du deuxième brin supérieur (9) est disposée avant l'extrémité tournée vers la deuxième bande transporteuse (8) du premier brin supérieur (7) dans la direction de transport (T).

7. Dispositif selon l'une quelconque des revendications 1 à 6, **caractérisé en ce qu'**une largeur de fente (s) de la fente (10) est définie par le décalage en hauteur (h) et par une distance horizontale (a) ou par un recouvrement horizontal (u) de l'extrémité tournée vers la deuxième bande transporteuse (8) du premier brin supérieur (7) et de l'extrémité tournée vers la première bande transporteuse (6) du deuxième brin supérieur (9), de manière à ce que le repère lisible par machine (3) appliqué sur la face inférieure (13) de l'objet (2) puisse être lu par l'élément palpeur (11) indépendamment de l'orientation de l'objet (2) sur l'unité de transport (4).

8. Dispositif selon l'une quelconque des revendications 1 à 7, **caractérisé en ce que** l'élément palpeur (11) présente une distance (x) de la fente (10) ou du recouvrement (14) comprise entre 3 mm et 100 mm.

9. Dispositif selon l'une quelconque des revendications 1 à 8, **caractérisé en ce que** le dispositif de balayage (5) présente au moins un autre élément palpeur (12) aligné sur l'objet (2), qui sont disposés au-dessus et/ou de manière latéralement espacée du dispositif de transport (4) pour balayer des surfaces latérales de l'objet (2) ne se trouvant pas sur le dispositif de transport (4).

10. Dispositif selon l'une quelconque des revendications 1 à 9, **caractérisé en ce que** le premier brin supérieur (7) et/ou le deuxième brin supérieur (9) est disposé de manière orientée horizontalement.

11. Dispositif selon l'une quelconque des revendications 1 à 10, **caractérisé en ce que** le dispositif de balayage (5) comporte un dispositif de balayage linéaire, une ligne d'éléments photoélectriques ou une caméra.

12. Procédé de balayage optique d'un repère lisible par machine appliqué sur un objet, dans lequel l'objet reposant par une face inférieure sur un dispositif de transport et transporté dans une direction de transport est transféré d'une première bande transporteuse du dispositif de transport, qui comporte un premier brin supérieur, à une deuxième bande transporteuse du dispositif de transport, qui comporte un deuxième brin supérieur, et dans lequel la face inférieure de l'objet est balayée lors du transfert au moyen d'un élément palpeur d'un dispositif de balayage qui est associé à une fente formée entre la première bande transporteuse et la deuxième bande transporteuse disposée avant la première bande transporteuse dans la direction de transport, dans lequel l'objet (2) est pivoté lors du transfert de la première bande transporteuse (6) à la deuxième bande transporteuse (8) sur la base d'un décalage en hauteur (h) du premier brin supérieur (7) et du deuxième brin supérieur (9) pour balayer la face inférieure de l'objet (2) au moyen de l'élément palpeur (11),
**caractérisé en ce qu'**un décalage en hauteur (h) des premier et deuxième brins supérieurs (7, 9) est sélectionné de manière à ce que, lors du transfert d'une région avant de l'objet (2) à la deuxième bande transporteuse (8), une région arrière de l'objet (2) soit encore en contact avec la première bande transporteuse (6),
ou **en ce que** les faces avant tournées l'une vers l'autre (16, 17) de la première bande transporteuse (6) et de la deuxième bande transporteuse (8) sont disposées de manière à se chevaucher au moins par endroits dans la direction de transport (T), dans lequel la première bande transporteuse (6) et la deuxième bande transporteuse (8) forment un étage dans la région de la fente (10), dans lequel le premier brin supérieur (7) est disposé au-dessus du deuxième brin supérieur (9).

13. Procédé selon la revendication 12, **caractérisé en ce que** l'objet (2) est automatiquement transféré sous l'effet de la gravité du premier brin supérieur (7) au deuxième brin supérieur (8) disposé en-dessous de ce dernier.

14. Système comprenant
un objet muni d'un repère lisible par machine appliqué sur celui-ci et
d'un dispositif destiné à balayer optiquement le repère lisible par machine appliqué sur l'objet, comportant un dispositif de transport pour transporter l'objet reposant par une face inférieure sur le dispositif de transport dans une direction de transport, qui comporte une première bande transporteuse présentant un premier brin supérieur et une deuxième bande transporteuse présentant un deuxième brin supérieur, dans lequel une fente est formée entre la première bande transporteuse et la deuxième bande transporteuse disposée avant la première bande transporteuse dans la direction de transport, et comportant un dispositif de balayage pour balayer le repère lisible par machine, dans lequel le dispositif de balayage présente au moins un élément palpeur associé à la fente,
**caractérisé en ce qu'**un décalage en hauteur (h) des premier et deuxième brins supérieur (7, 9) est sélectionné de manière à ce que, lors du transfert d'une région avant de l'objet (2) à la deuxième bande transporteuse (8), une région arrière de l'objet (2) soit encore en contact avec la première bande transporteuse (6).
